Europäisches Patentamt

European Patent Office

Office européen des brevets

(19)

(11) Publication number: 0 160 123

A2

(12) **EUROPEAN PATENT APPLICATION**

(21) Application number: 84113487.7

(22) Date of filing: 08.11.84

(51) Int. Cl.⁴: **F 41 G 3/26**
**F 41 J 5/10**

(30) Priority: 17.11.83 JP 215094/83
17.11.83 JP 215095/83
29.11.83 JP 183129/83 U
29.11.83 JP 183130/83 U

(43) Date of publication of application:
06.11.85 Bulletin 85/45

(84) Designated Contracting States:
CH DE FR GB IT LI

(71) Applicant: Kuroiwa, Motoi
27-12, Kugahara 4-chome Ohta-ku
Tokyo(JP)

(72) Inventor: Kuroiwa, Motoi
27-12, Kugahara 4-chome Ohta-ku
Tokyo(JP)

(74) Representative: Wey, Hans-Heinrich, Dipl.-Ing. et al,
Patentanwälte Müller-Börner & Wey Widenmayerstrasse
49
D-8000 München 22(DE)

(54) **Shot monitoring apparatus.**

(57) An apparatus is used in combination with a gun for monitoring shooting operation, which comprises imaging lens means having an optical axis and removably secured to the barrel of the gun, the optical axis extending substantially parallel to the axis of the gunbarrel, camera means coupled to said imaging means to constitute a video camera unit with said imaging means, a video tape recorder connected to said camera means, and a video display unit connected to the VTR for reproducing the scene taken by the camera unit. The imaging lens means may be physically separated from and optically coupled to the camera means or they may be assembled into a compact video camera. The apparatus is used in combination with a shotgun for monitoring the position of a shot in trap shooting exercise and with a rifle for monitoring the movement of the rifle held by the shooter.

FIG. 1

Shot Monitoring Apparatus

This invention relates to an apparatus for use in combination with a gun for monitoring targeting accuracy, and more particularly, to an apparatus for use in combination with a shotgun for monitoring the position of a shot in trap shooting exercise as well as an apparatus for use in combination with a rifle for monitoring the movement of the rifle held by the shooter.

BACKGROUND OF THE INVENTION

The monitoring apparatus of the present invention is helpful for persons in exercising shotgun and rifle shooting. In the clay or skeet or trap shooting, clay pigeons are thrown from a trap and the shooter points a shotgun at the pigeon. The shooter pulls the trigger to eject a shot of pellets at the pigeon. The shooter succeeds or fails to shoot the pigeon as the case may be. In such exercise, an adviser often stands behind the shooter and gives adequate comments to the shooter. With the advance of the television technology, video cameras are now often used for the monitoring of such exercise. A video camera is placed behind or aside the shooter to monitor the shooting operation of the shooter. This monitoring method is, however, difficult to determine whether the shooter precisely sights the gun at the pigeon, and more specifically, whether the shot is vertically or laterally off the pigeon.

In the case of rifle and pistol shooting, the shooter holds the rifle on the shoulder and sights it at a stationary target. In this case, it is easily possible to determine whether the shooter precisely sights the gun at the target, and more specifically, whether the shot is vertically or laterally off the target because the target is actually shot and the shot target is visually observed. However, it is helpful for the shooter if the actual sighting process can be monitored. In a precise sense, when one sights the rifle, the rifle is not held stationarily, but slightly moved or swung. The sight of the rifle is slightly moved with respect to the target in a manner inherent to individual shooters. The rifle sight is moved vertically, laterally or obliquely with respect to the target. In order to improve the shooting skill, it is important for one to acknowledge the manner of movement of the rifle held to thereby properly decide the timing of shot. Of course, the shooter himself or herself knows the manner of movement of the rifle held by him or her immediately before and at the instant of shooting. However, the shooter cannot exactly follow or remember the movement of the rifle sight. There is the need for an apparatus which can monitor the actual movement of the rifle (or sight) in relation to the target and reproduce the scene on a display. Then the shooter and the adviser can visually analyze the sighting process on the television picture screen to detect the shooter's shortcoming or peculiar way of shooting or sighting.

## SUMMARY OF THE INVENTION

It is, therefore, an object of the present invention to provide an apparatus for use in combination with a gun for monitoring shooting operation.

It is another object of the present invention to provide an apparatus for use in combination with a shotgun for monitoring the position of a shot in trap shooting exercise.

It is a further object of the present invention to provide an apparatus for use in combination with a rifle for monitoring the movement of the rifle held by the shooter.

It is a still further object of the present invention to provide an apparatus for use in combination with a gun for monitoring shooting operation, which can record and display the aiming process on the screen of a television set.

According to the present invention, there is provided an apparatus for use in combination with a gun for monitoring shooting operation, comprising

imaging means having an optical axis and adapted to be fixedly secured to the barrel of the gun for taking a scene on the optical axis, the optical axis extending substantially parallel to the axis of the gunbarrel, but crossing the axis of the gunbarrel at a predetermined distance,

camera means coupled to said imaging means to constitute a television camera unit with said imaging means for converting the scene into video signals, and

video recording means connected to said camera means for recording the video signals.

In a preferred embodiment, the apparatus further comprises display means connected to said video means for reproducing the scene taken by said imaging means.

The imaging means may be optically coupled to the camera means in one embodiment. The imaging means may be electrically coupled to the camera means to form a video camera unit in another embodiment.

According to a second aspect of the present invention, there is provided an apparatus for use in combination with a gun for monitoring shooting operation, comprising

imaging means having an optical axis and adapted to be fixedly secured to the barrel of the gun for taking a scene on the optical axis, the optical axis extending substantially parallel to the axis of the gunbarrel, but crossing the axis of the gunbarrel at a predetermined distance,

camera means coupled to said imaging means to constitute a television camera unit with said imaging means for converting the scene into video signals, and display means connected to said camera means for reproducing the scene taken by said imaging means.

## BRIEF DESCRIPTION OF THE DRAWINGS

Fig. 1 is a schematic illustration of one preferred embodiment of the shot monitoring apparatus of the present invention;

Fig. 2 is an axial cross-section of the imaging lens system in housing;

Fig. 3 is a schematic illustration of another preferred embodiment of the shot minotoring apparatus of the present invention;

Fig. 4 is an enlarged view of the camera unit used in the embodiment of Fig. 3;

Fig. 5 is a schematic cross section of the screen attached to the picture tube;

Fig. 6 is a schematic cross section of the screen mounted in the display unit;

Figs. 7a through 7e are elevations of different embodiments of the screen;

Fig. 8 is an elevation of the display unit having the screen attached, an image of the target being displayed; and

Fig. 9 illustrates how the shooter uses the apparatus of the invention.

## DETAILED DESCRIPTION OF THE PREFERRED EMBODIMENTS

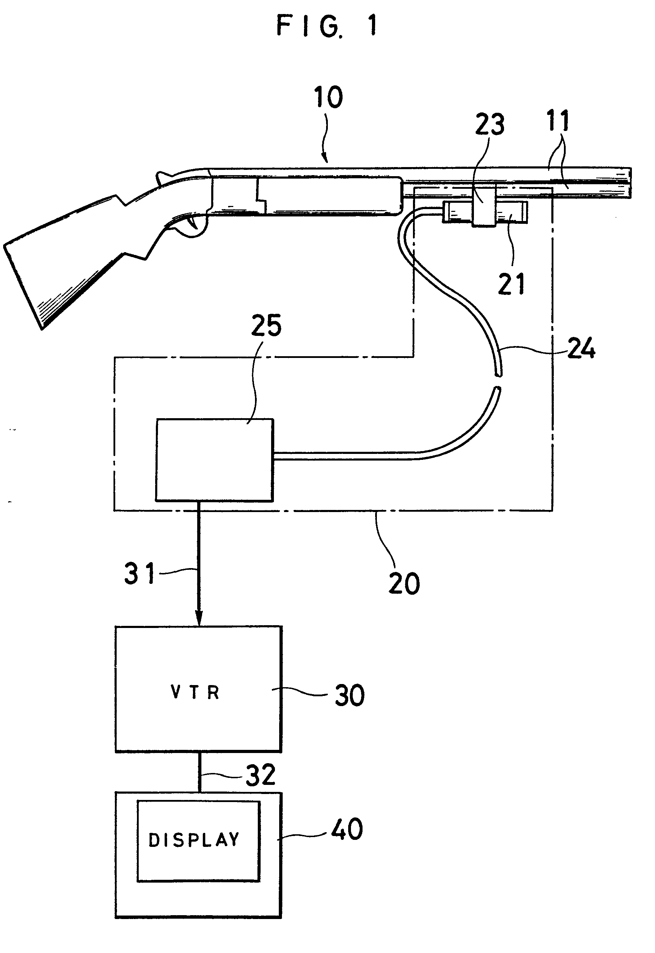

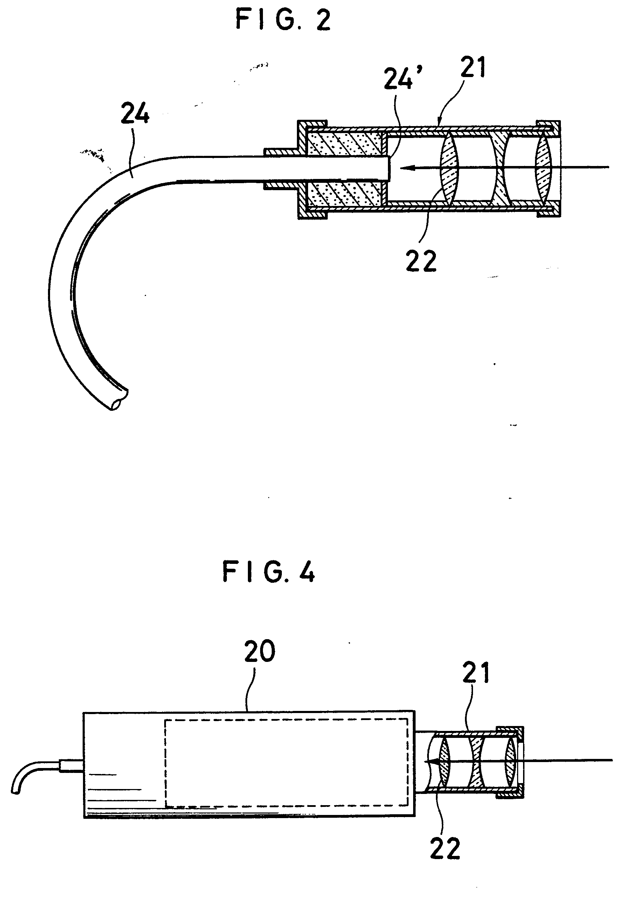

Referring to Fig. 1, there is illustrated a shot monitoring apparatus according to one preferred embodiment of the present invention. There is shown a shotgun 10 having a pair of vertically arranged barrels 11. The monitoring apparatus includes a television or video camera unit designated generally at 20. The camera unit 20 includes imaging means in the form of a cylindrical housing 21 enclosing an imaging lens system 22. The housing 21 is removably secured to the under barrel 11 by means of a suitable fixture 23 such that the optical axis of the lens system extends substantially parallel to the axis of the gun barrel, but crosses the axis of the gunbarrel at a predetermined distance or "range", which is 20 or 30 m in the case of trap shooting and about 50 m in the case of rifle shooting, for example. The lens system 22 is optically coupled to a camera body 25 through a flexible optical fiber cable 24. More particularly, referring to Fig. 2, the housing 21 encloses therein the imaging lens system 22 consisting of a proper combination of lens. The optical fiber cable 24 is preferably coupled to the lens system 22 such that the leading end 24' of the fiber cable is at the focus of the lens system 22. The trailing end of the fiber cable 24 is coupled to the camera body 25, which may include a focusing lens system, a photoelectric conversion element, and associated elements including an amplifier. The camera unit 20 is a simple modificiation of a commercial video camera unit in which only the imaging lens system is separated from the body of the video camera unit. The imaging means in the form of a lens system serves to take a scene on the optical axis and the camera unit serves to convert the scene into video signals.

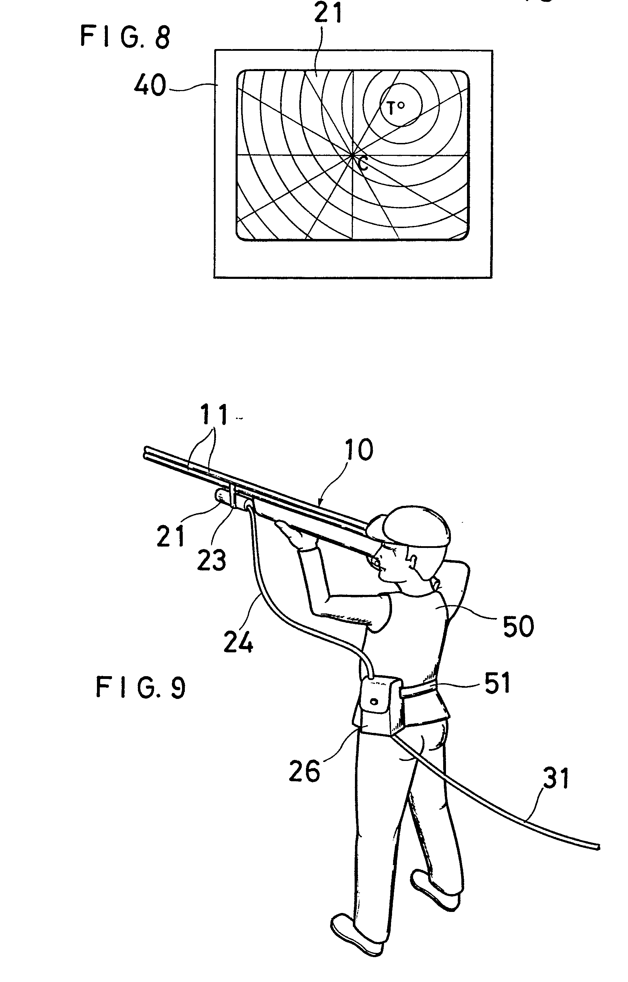

The camera body 25 may preferably be received in a casing or box 26 which may be placed at a suitable position in the shooting range or the shooter may put on at his shoulder or waist (see Fig. 9).

The video camera body 25 is electrically connected a video deck 30 for recording the video signals, preferably a video tape recorder through an electric cable 31, and the VTR 30 is, in turn, connected to a monitoring video display unit 40 for reproducing the scene upon receipt of the video signals. The VTR 30 may be a commercially available video tape recorder which may preferably have a slow function and optionally, still and frame-by-frame feed functions. The display unit 40 may be a monitoring television picture unit or an ordinary television set both commercially available.

It should be noted that a power supply to the above-described components is omitted in the drawings.

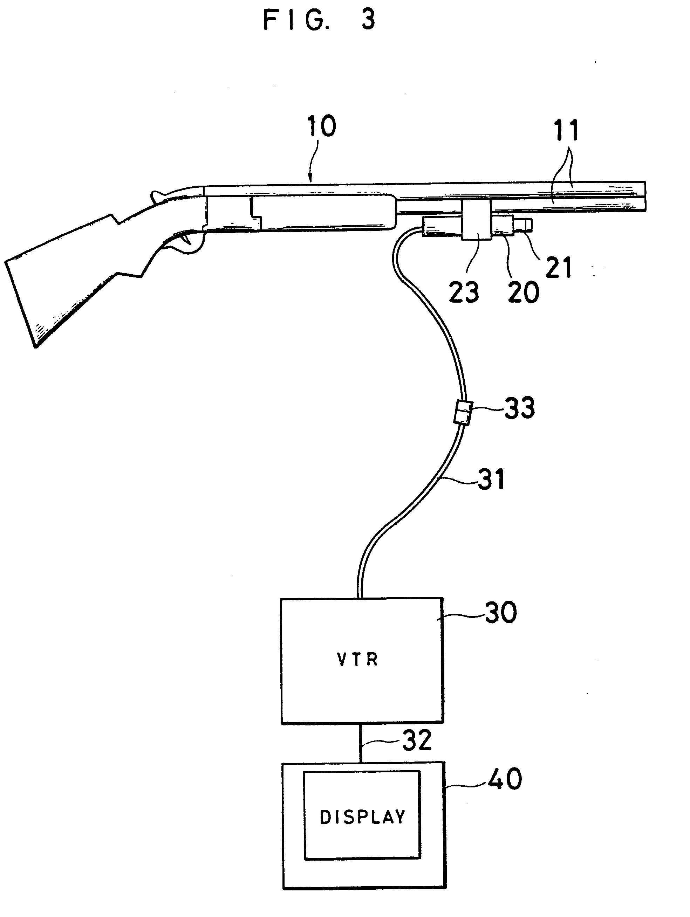

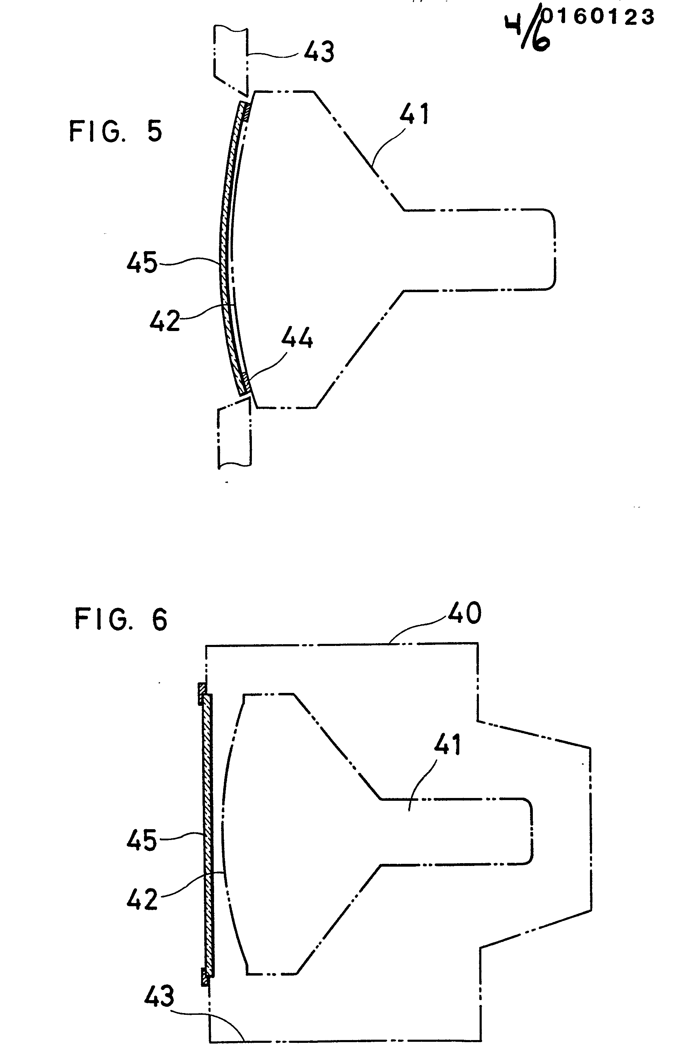

Another embodiment of the present invention is illustrated in Figs. 3 and 4. In this embodiment, a small-size video camera unit is used. The camera unit 20 is removably secured to the gunbarrel 11 by means of a suitable fixture 23. The video camera unit must be sufficiently compact and light-weight so as not to disturb the shooting operation and may preferably be a solid-state video camera unit, for example, a CCD video camera unit. Another requirement for the camera unit is impact resestance because a great impact is applied to the camera unit upon firing of the gun. A shock absorber may be placed between the gunbarrel and the camera unit. The video camera unit 20 has a cylindrical housing 21 enclosing an imaging lens system 22 therein and projecting from the camera unit as shown in Fig. 4. The camera unit further comprises a solid-state camera tube and associated parts in a rigid housing. Of course, the imaging lens system 22 has an optical axis extending substantially parallel to the axis of the gunbarrel, but crossing the axis of the gunbarrel at a predetermined distance as in the first embodiment.

The camera unit 20 is electrically connected to a video deck 30, preferably a video tape recorder through an electric cable 31 and then to a display unit 40, preferably a monitoring television picture unit through an electric cable 32.

In the first and second embodiments, both the video tape recorder and the display units are used in combination in the apparatus of the present invention. In some applications, however, either the video tape recorder or the display unit may be omitted. When the camera unit is combined with only the video tape recorder, the scene taken by the camera unit is recorded in video tape by means of the video tape recorder. When the camera unit is combined with only the display unit, the scene taken by the camera unit is simultaneously displayed on the display unit. A suitable transmitting means or adaptor may be inserted between the camera unit and the display unit if commercial video camera and video picture display units are used.

A connector 33 may be inserted in the cable 31 to divide the cable into a first length of cable of about 80 to 100 cm long and a second length of cable. The connector 33 may be placed in the casing convenience of handling.

Next, the display unit 40 used in the shot monitoring apparatus of the present invention will be illustrated in further detail.

Referring to Fig. 5, there is illustrated one example of the display unit as comprising a conventional cathode-ray tube 41 and a screen 45. Within the confine of a housing 43, the screen 45 is attached to the face 42 of the cathode-ray tube 41, for example, by an adhesive 44 at the edges.

Another example of the display unit is illustrated in Fig. 6. The screen 45 is placed in front of the face 42 of the cathode ray tube 41 by engagement with the frame 43 of the television set.

Of course, the way of attaching the screen to the display unit is not limited to these examples and any suitable attachment will occur to those skilled in the art.

The screen 45 is a rectangular transparent plate made of synthtic resins, such as acrylic, polyamide, and polycarbonate resins or celluloid as well as glass. The screen 45 may also be a flexible transparent film of well-known plastics particularly when the screen is in direct contact with the face of the cathode-ray tube.

The screen 45 has a pattern printed thereon to represent at least the center of a shot from the gun.

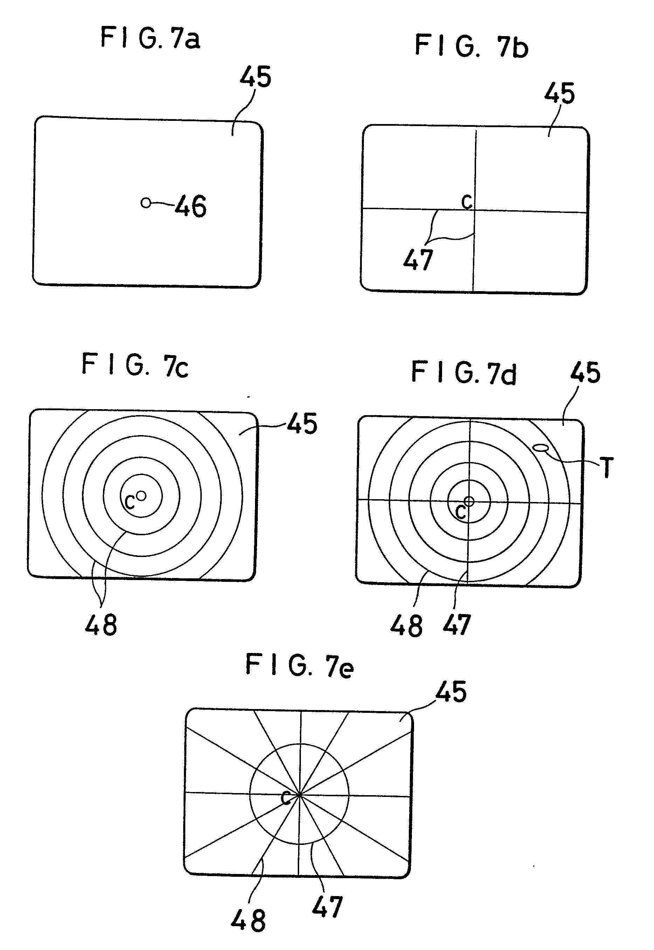

As shown in Fig. 7a, the pattern on the screen 45 may be a small circle 46 located at the center of the screen, that is, the center of the face of the cathode-ray tube. It will be understood that this circle 46 represents a point of shot or center of sight as will be understood from the following description.

Other examples of the pattern on the screen 45 are shown in Figs. 7b, 7c, 7d and 7e. The screen 45 shown in Fig. 7b has a pattern of vertical and horizontal lines 45 crossing at the center C. The screen 45 shown in Fig. 7c has a pattern of concentric circles 48 about the center C. The screen 45 shown in Fig. 7d has a pattern of perpendicular lines 47 and concentric circles 48 about the center C. The screen 45 shown in Fig. 7e has a pattern of radial lines 47 and a large circle 48 about the center C. The patterns are not limited to these examples. A proper screen may be selected from these and other patterns depending on the intended use. For examples, the screens as shown in Figs. 7a, 7b, 7c, and 7d may be selected in the case of trap shooting while the sereen as shown in Fig. 7e is particularly suitable for rifle shooting.

Next, the operation of the shot monitoring apparatus according to the present invention will be described with in conjunction with trap shooting.

At the outset, the lens housing 21 in the case of the first embodiment shown in Fig. 1 or the camera unit 20 in the case of the second embodiment shown in Fig. 3 is secured to the gunbarrel of the shotgun 10. The camera body is placed in the casing 26 which is put on the waist of the shooter by means of a belt 51. A power switch is closed to turn on the camera unit 20, video deck 30, and monitoring display unit 40. Of course, the video tape recorder is loaded with a video tape cassette. Then the shooter 50 with the gun 10 in hands stands on the shooting range as shown in Fig. 9. When a clay pigeon is thrown in the sky from the trap, the shooter points the gun at the pigeon. The imaging lens system secured parallel to the gunbarrel catches an image of the flying pigeon. The image of the pigeon is transmitted to the camera unit 20, and then recorded in video tape by means of the video tape recorder and at the same time, displayed on the screen of the display unit 40. When the shooter pulls the triger, the impact of a shot causes the gun to move and thus the picture to be violently moved as if the camera was panned. It is now assumed that the shot missed the clay pigeon. Provided that an image of the clay pigeon T has been displayed at an upper right position with respect to the center C as shown in Fig. 7d immediately before shooting or sudden violent movement of the picture, then the actual shot is off the clay pigeon in a lower left direction by a distance of T-C. The direction and distance of a miss shot relative to the target can be determined in the instant of shooting by an instructor in front of the display unit.

After making a series of shots, the shooter can immediately review his pointing (or aiming) and shooting operations just finished by playing the video tape recorder in the reproduction mode. He can monitor or follow his own pointing and shooting operations and determine the position of each shot relative to the clay pigeon for acknowledging his own way of shooting or shortcomings.

In the case of rifle shooting, the operation of the shot monitoring apparatus according to the present invention is the same as described for trap shooting. The shooting operation and the scene on the display are somewhat different and thus briefly described below.

At the outset, the lens housing 21 in the case of the first embodiment shown in Fig. 1 or the camera unit 20 in the case of the second embodiment shown in Fig. 3 is secured to the gunbarrel of the rifle 10. A power switch is closed to turn on the camera unit 20, video deck 30, and monitoring display unit 40. Then the shooter 50 with the rifle 10 in hands stands on the shooting range as shown in Fig. 9. The shooter 50 gently aims or sights the rifle at a stationary target. At this point, the imaging lens system secured parallel to the barrel catches an image of the target. The image of the target is transmitted to the camera unit 20, and then recorded in video tape by means of the video tape recorder 30 and at the same time, displayed on the screen of the display unit 40. For example, a scene as shown in Fig. 8 is displayed on the screen where the center of sight C is off the center of the target T in a lower left direction. It is difficult to hold the rifle completely stationary. The rifle is slightly moved. The movement of the rifle held by the shooter is faithfully displayed on the screen in a somewhat enlarged form. For instance, the center of sight is slowly moved up and down in an oblique direction with respect to the target center until the rifle is triggered. The triggering gives a sudden violent shock to the rifle and the picture is violently moved.

The way of sighting by the shooter can be observed on the display screen by an instructor in the instant of shooting. After making a series of shots, the shooter can immediately review his sighting and shooting operations just finished by playing the video tape recorder in the reproduction mode. He can monitor or follow his own sighting and shooting operations, and determine the instant of triggering in the stroke of movement of the sight or rifle for acknowledging his own way of movement upon sighting or shortcomings.

As described above, the shot monitoring apparatus according to the present invention is designed such that the point of shot or center of sight of the gun is displayed on the screen of a television picture tube at its central point. An error or deviation of a shot and, more particularly, the distance and direction of a shot with respect to a moving target or the movement of the sight or gun with respect to a stationary target can be recorded in video tape and simultaneously or subsequently displayed on the screen of the display unit. The shooter's pointing or aiming and shoting operations can be reviewed in the slow mode, if desired, to find out his own way of shooting and shortcomings. The apparatus is thus expected to greatly contributing to improvements in the shooting skill of individual gunners. When only the scope means of a video camera unit which is relatively impact resistant is secured to the gun, those parts which would be damaged by the shock upon shooting are minimized. When the remaining camera body is placed in a casing which is put on by the shooter, the length of the optical fiber cable coupling the scope means to the camera body is as short as about 80 to 100 cm, offering a further advantage in economy. When a camera unit is secured to the gun, it must be resestant to impact. A suitable impact-resistant camera unit may be selected from commercially available solid-state camera units such as CCD camera units.

The shot representing screen for use in combination with the display unit, usually a television receiver picture tube, of the shot monitoring apparatus according to the present invention is helpful in visually determining the position of a shot or sight relative to an image of the moving target (of clay pigeon) or stationary target displayed on the face of the picture tube. Accurate and easy determination is ensured. The shooter can review his sighting and shooting operations on his home television set simply by attaching the screen on the television set and playing the recorded video tape on the video deck.

Although the present invention is described with reference to the particular embodiment, the invention is not limited thereto. The guns to which the present invention is applicable include shotguns, rifles, pistols and any other types of guns. Although the camera unit is separated into imaging lens means and a camera body in the first embodiment, the camera unit may be separated in different components and any desired components may be secured to the gun together with the imaging lens means. The video tape recorder is described as a typical example of the video recording means although video disc recorders and other recording machines may be equally be utilized. The cathode-ray tube is described as a typical example of the display unit although liquid crystal and other display units may be equally utilized. Furthermore, the electric cables may be eliminated if the radio transmission of video signals is desired even at the sacrifice of cost.

WHAT IS CLAIMED IS:

1.  An apparatus for use in combination with a gun for monitoring shooting operation, comprising

imaging means having an optical axis and adapted to be fixedly secured to the barrel of the gun for optically taking a scene on the optical axis, the optical axis extending substantially parallel to the axis of the gunbarrel, but crossing the axis of the gunbarrel at a predetermined distance,

camera means coupled to said imaging means to constitute a television camera unit with said imaging means for converting the scene into video signals, and

video means connected to said camera means for recording the video signals.

2.  The apparatus according to claim 1 which is used in combination with a shotgun for monitoring the position of a shot in trap shooting exercise.

3.  The apparatus according to claim 1 which is used in combination with a rifle for monitoring the movement of the rifle held by the shooter.

4.  The apparatus according to claim 1 which is used in combination with a pistol for monitoring the movement of the pistol held by the shooter.

5.  The apparatus according to claim 1 wherein the imaging means comprises a lens system,

the lens system is optically coupled to the camera means through a flexible optical fiber cable.

6.  The apparatus according to claim 5 wherein the video means is connected to the camera means through an electric cable.

7.      The apparatus according to claim 5 wherein the video
means is a video tape recorder.

8.      The apparatus according to claim 5 which further
comprises
    display means connected to said video means for
reproducing the scene taken by said imaging means.

9.      The apparatus according to claim 5 which further
comprises a casing which accommodates the camera means
therein, the casing being removably put on by the shooter.

10.     The apparatus according to claim 5 wherein said
imaging means comprises a cylindrical housing enclosing the
lens system, said housing being removably securable to the
gunbarrel by means of a fixture.

11.     The apparatus according to claim 5 wherein the
display means comprises a picture tube and a transparent
screen having a pattern printed thereon, said pattern
representing at least the center of the picture face of the
tube.

12.     The apparatus according to claim 5 wherein said
pattern comprises concentric circles and/or radial lines.

13.     The apparatus according to claim 1 wherein the
imaging means and the camera means are integrally assembled
to form a compact television camera unit.

14.     The apparatus according to claim 13 wherein the
camera unit is connected to the video means through an
electric cable.

15.     The apparatus according to claim 13 wherein the video
means is a video tape recorder.

16.    The apparatus according to claim 13 which further comprises

display means connected to said video means for reproducing the scene taken by said imaging means.

17.    The apparatus according to claim 13 wherein the television camera unit is removably securable to the gunbarrel by means of a fastener.

18.    The apparatus according to claim 13 wherein said television camera unit is a solid-state camera unit.

19.    The apparatus according to claim 13 wherein the display means comprises a picture tube and a transparent screen having a pattern printed thereon, said pattern representing at least the center of the picture face of the tube.

20.    The apparatus according to claim 13 wherein said pattern comprises concentric circles and/or radial lines.

21.    An apparatus for use in combination with a gun for monitoring shooting operation, comprising

imaging means having an optical axis and adapted to be fixedly secured to the barrel of the gun for taking a scene on the optical axis, the optical axis extending substantially parallel to the axis of the gunbarrel, but crossing the axis of the gunbarrel at a predetermined distance,

camera means coupled to said imaging means to constitute a television camera unit with said imaging means for converting the scene into video signals, and

display means connected to said camera means for reproducing the scene taken by said imaging means.

22.    The apparatus according to claim 21 which is used in combination with a shotgun for monitoring the position of a shot in trap shooting exercise.

23.    The apparatus according to claim 21 which is used in combination with a rifle for monitoring the movement of the rifle held by the shooter.

24.    The apparatus according to claim 21 which is used in combination with a pistol for monitoring the movement of the pistol held by the shooter.

25.    The apparatus according to claim 21 wherein the imaging means comprises a lens system,
     the lens system is optically coupled to the camera means through a flexible optical fiber cable.

26.    The apparatus according to claim 25 wherein the display means is connected to the camera means through an electric cable.

27.    The apparatus according to claim 21 which further comprises
     means connected between said camera means and said display means for transmitting the video signals from said camera means to said display means.

28.    The apparatus according to claim 27 wherein said means is a video tape recorder.

29.    The apparatus according to claim 25 which further comprises a casing which accommodates the camera means therein, the casing being removably put on by the shooter.

30. The apparatus according to claim 25 wherein said imaging means comprises a cylindrical housing enclosing the lens system, said housing being removably securable to the gunbarrel by means of a fixture.

31. The apparatus according to claim 25 wherein the display means comprises a picture tube and a transparent screen having a pattern printed thereon, said pattern representing at least the center of the picture face of the tube.

32. The apparatus according to claim 25 wherein said pattern comprises concentric circles and/or radial lines.

33. The apparatus according to claim 21 wherein the imaging means and the camera means are integrally assembled to form a compact television camera unit.

34. The apparatus according to claim 33 wherein the camera unit is connected to the display means through an electric cable.

35. The apparatus according to claim 33 which further comprises
    means connected between said camera means and said display means for transmitting the video signals from said camera means to said display means.

36. The apparatus according to claim 35 wherein the video means is a video tape recorder.

37. The apparatus according to claim 33 wherein the television camera unit is removably securable to the gunbarrel by means of a fixture.

38. The apparatus according to claim 33 wherein said television camera unit is a solid-state camera unit.

39.    The apparatus according to claim 33 wherein the
display means comprises a picture tube and a transparent
screen having a pattern printed thereon, said pattern
representing at least the center of the picture face of the
tube.

40.    The apparatus according to claim 33 wherein said
pattern comprises concentric circles and/or radial lines.

41.    A screen for representing a shot of a gun, adapted to
be mounted on a display unit adjacent    the face thereof
and having a pattern printed thereon to represent at least
the center of the display face.

42.    The screen according to claim 41 wherein said screen
comprises a transparent rectangular plate of plastic
material.

43.    The screen according to claim 41 wherein said screen
comprises a transparent rectangular film of plastic
material.

44.    The screen according to claim 41 wherein said pattern
is a combination of concentric circles and/or radial lines.

F I G. 1

FIG. 2

FIG. 4

F I G.  3

FIG. 5

43

41

45

42

44

FIG. 6

40

41

45

42

43

FIG. 7a

45

○—46

FIG. 7b

45

c

47

FIG. 7c

45

c○

48

FIG. 7d

45

T

c

48 47

FIG. 7e

45

c

48 47

FIG. 8

21

40

T°

C

FIG. 9

11

10

21

23

24

50

51

26

31